# EUROPEAN PATENT APPLICATION

(11) **EP 3 474 119 A1**
(43) Date of publication of application: **24.04.2019**
(21) Application number: 18202115.4
(22) Date of filing: 23.10.2018
(51) Int. Cl.: G06F 3/01

(54) **SYSTEMS AND METHODS FOR MULTI-DEGREE-OF-FREEDOM SHAPE CHANGING DEVICES**

(30) Priority: 23.10.2017 US 201715790524
(71) Applicant: Immersion Corporation, San Jose, CA 95134 (US)
(72) Inventor: GRANT, Danny, Montreal, Québec H2W 2R2 (CA); RIHN, William, San Jose, CA California 95134 (US); OLIEN, Neil T., Montreal, Québec H2W 2R2 (CA); FOREST, Simon, Montreal, Québec H2W 2R2 (CA)
(74) Representative: McDougall, Robert Campbell

(57) **Abstract**

One example device (200, 400, 500, 700), e.g. a handheld mobile communication terminal, according to this disclosure includes a housing (210) sized to be grasped by a hand; a shape-change element (250, 410a-b, 510a-b, 710a-b) disposed at least partially within the housing (210); and a plurality of actuators (240a-b, 420a-b, 520a-b, 720a-b) disposed within the housing (210), the plurality of actuators (240a-b, 420a-b, 520a-b, 720a-b) arranged to rotate and translate the shape-change element (250, 410a-b, 510a-b, 710a-b) in order to provide a haptic feedback to the user. An example method for multi-degree-of-freedom shape-changing devices (200, 400, 500, 700) includes determining a shape-change haptic effect to output to a shape-change device (200, 400, 500, 700), the shape-change device (200, 400, 500, 700) comprising a housing (210) and at least one shape-change element (250, 410a-b, 510a-b, 710a-b) disposed at least partially within the housing (210), the shape-change haptic effect comprising a translation and a rotation of the shape-change element (250, 410a-b, 510a-b, 710a-b); generating a haptic signal based on the shape-change haptic effect; and transmitting the haptic signal to one or more actuators (240a-b, 420a-b, 520a-b, 720a-b) of a plurality of actuators (240a-b, 420a-b, 520a-b, 720a-b) to cause the shape-change haptic effect, the plurality of actuators (240a-b, 420a-b, 520a-b, 720a-b) arranged to translate and rotate the shape-change element (250, 410a-b, 510a-b, 710a-b).

## Description

### FIELD

The present application generally relates to electronic interface devices, and more specifically relates to systems and methods for multi-degree-of-freedom shape changing devices.

### BACKGROUND

Handheld devices, such as smartphones, can be grasped by a user and held while the user interacts with the device. For example, the user may check their email, browse the Internet, or make a telephone call. In the course of interacting with the device, the device may actuate an eccentric-rotating mass ("ERM") actuator to generate a vibration to notify the user of the arrival of a new text message. Such haptic effects may provide the user with a more enjoyable experience when interacting with the device.

### SUMMARY

Various examples are described for systems and methods for multi-degree-of-freedom shape changing devices. One example device includes a housing sized to be grasped by a hand; a shape-change element disposed at least partially within the housing; and a plurality of actuators disposed within the housing, the plurality of actuators arranged to rotate and translate the shape-change element.

One example method includes determining a shape-change haptic effect to output to a shape-change device, the shape-change device comprising a housing and at least one shape-change element disposed at least partially within the housing, the shape-change haptic effect comprising a translation and a rotation of the shape-change element; generating a haptic signal based on the shape-change haptic effect; and transmitting the haptic signal to one or more actuators of a plurality of actuators to cause the shape-change haptic effect, the plurality of actuators arranged to translate and rotate the shape-change element

There is presented, in a first aspect, a device comprising: a housing sized to be grasped by a hand; a shape-change element disposed at least partially within the housing; and, a plurality of actuators disposed within the housing, the plurality of actuators arranged to rotate and translate the shape-change element. The first aspect may be modified in any way disclosed herein including, but not limited to, any one or more of the following.

The device may be configured such that the plurality of actuators comprises two linear actuators. The device may be configured such that the plurality of actuators comprises a linear actuator and a rotary actuator. The device may be configured such that the linear actuator is arranged to translate the rotary actuator and the shape-change element. The device may be configured such that the plurality of actuators comprises two rotary actuators. The device may be configured such that the manipulandum comprises two shape-change elements, each of the two shape-change elements disposed at least partially within the housing and on opposite sides of the housing. The device may be configured such that the plurality of actuators are arranged to translate each of the two shape-change elements and rotate each of the two shape-change elements. The device may be configured such that the plurality of actuators are arranged to: translate the shape-change element in a first degree of freedom; rotate the shape change element in a second degree of freedom about a first axis of rotation; and, rotate the shape change element in a third degree of freedom about a second axis of rotation different from the first axis of rotation. The device may further comprise: a non-transitory computer-readable medium; and a processor configured to execute processor-executable instructions stored on the non-transitory computer-readable medium to: receive a signal indicating a shape-change haptic effect to output to the manipulandum; generate a haptic signal based on the shape-change haptic effect; and, transmit the haptic signal to the plurality of actuators to cause the shape-change haptic effect. The processor may be configured to execute processor-executable instructions stored on the non-transitory computer-readable medium to determine the shape-change haptic effect to output to a manipulandum. The processor may be configured to execute processor-executable instructions stored on the non-transitory computer-readable medium to detect a contact with the manipulandum.

There is presented, in a second aspect, a method comprising: determining a shape-change haptic effect to output to a shape-change device, the shape-change device comprising a housing and at least one shape-change element disposed at least partially within the housing, the shape-change haptic effect comprising a translation and a rotation of the shape-change element; generating a haptic signal based on the shape-change haptic effect; and transmitting the haptic signal to one or more actuators of a plurality of actuators to cause the shape-change haptic effect, the plurality of actuators arranged to translate and rotate the shape-change element. The second aspect may be modified in any way disclosed herein including, but not limited to, any one or more of the following.

The method may be configured such that the plurality of actuators comprises two linear actuators. The method may be configured such that the plurality of actuators comprises a linear actuator and a rotary actuator. The method may be configured such that the plurality of actuators comprises two rotary actuators. The linear actuator may be arranged to translate the rotary actuator and the shape-change element. The method may be configured such that the manipulandum comprises two shape-change elements, each of the two shape-change elements disposed at least partially within the housing and on opposite sides of the housing. The method may be configured such that the plurality of actuators are arranged to translate each of the two shape-change elements and rotate each of the two shape-change elements. The method may be configured such that the plurality of actuators are arranged to: translate the shape-change element in a first degree of freedom; rotate the shape change element in a second degree of freedom about a first axis of rotation; and rotate the shape change element in a third degree of freedom about a second axis of rotation different from the first axis of rotation. The method may further comprise detecting a contact with the shape-change device.

These illustrative examples are mentioned not to limit or define the scope of this disclosure, but rather to provide examples to aid understanding thereof. Illustrative examples are discussed in the Detailed Description, which provides further description. Advantages offered by various examples may be further understood by examining this specification.

### BRIEF DESCRIPTION OF THE DRAWINGS

The accompanying drawings, which are incorporated into and constitute a part of this specification, illustrate one or more certain examples and, together with the description of the example, serve to explain the principles and implementations of the certain examples.
Figures 1A-1B show an example multi-DOF shape-changing device according to this disclosure;
Figure 2 shows an example multi-DOF shape-changing device according to this disclosure;
Figures 3A-3E show an example multi-DOF shape-changing device according to this disclosure;
Figures 4-13 show example multi-DOF shape-changing devices according to this disclosure;
Figures 14A-14B show an example multi-DOF shape-changing device according to this disclosure;
Figure 15 shows an example system for multi-DOF shape-changing devices according to this disclosure;
Figure 16 shows an example computing device suitable for use with or as part of a multi-DOF shape-changing device according to this disclosure; and
Figure 17 shows an example method for changing a shape of a multi-DOF shape-changing device.

### DETAILED DESCRIPTION

Examples are described herein in the context of systems and methods for multi-degree-of-freedom shape changing devices. Those of ordinary skill in the art will realize that the following description is illustrative only and is not intended to be in any way limiting. Reference will now be made in detail to implementations of examples as illustrated in the accompanying drawings. The same reference indicators will be used throughout the drawings and the following description to refer to the same or like items.

In the interest of clarity, not all of the routine features of the examples described herein are shown and described. It will, of course, be appreciated that in the development of any such actual implementation, numerous implementation-specific decisions must be made in order to achieve the developer's specific goals, such as compliance with application- and business-related constraints, and that these specific goals will vary from one implementation to another and from one developer to another.

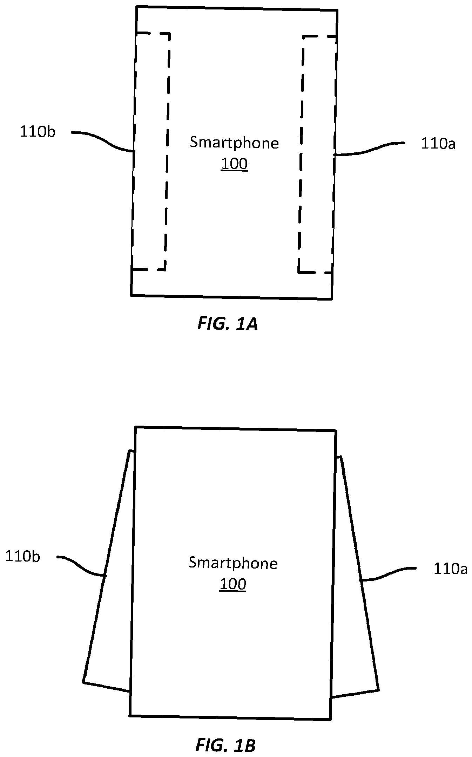

In one illustrative example, a user grasps their smartphone, which includes shape-changing features. Referring now to Figure 1A, in this example, the sides of the smartphone 100 include members 110a-b that run most of the length of the respective side. Each of the members has a rectangular shape and is initially positioned such that the respective member is positioned within the housing and flush with the side of the smartphone's housing. The user then launches a gaming app on his smartphone and begins to play the game.

During gameplay, the gaming app generates haptic signals that are transmitted by the smartphone's processor to actuators embedded within the smartphone 100 and connected to the members 110a-b. When the actuators are actuated by the haptic signals, the actuators adjust the position and orientation of a respective member 110a-b. Referring to Figure 1B, in this example, the actuators force an upper portion of each member 110a-b outward by a small amount, while forcing a lower portion of each member 110a-b out by a greater amount, thereby effecting a translation and rotation of the members 110a-b and changing the shape of the smartphone's housing. Over the course of playing the gaming app, portions of one or both members 110a-b may be translated or one or both of the members 110a-b may be rotated, or they may be both rotated and translated in one or more DOF. Thus, the smartphone's shape changes during gameplay and provides the user with haptic effects based on events occurring within the game, which may provide a more immersive experience for the user.

This illustrative example is given to introduce the reader to the general subject matter discussed herein and the disclosure is not limited to this example. The following sections describe various additional non-limiting examples and examples of systems and methods for multi-degree-of-freedom shape changing devices.

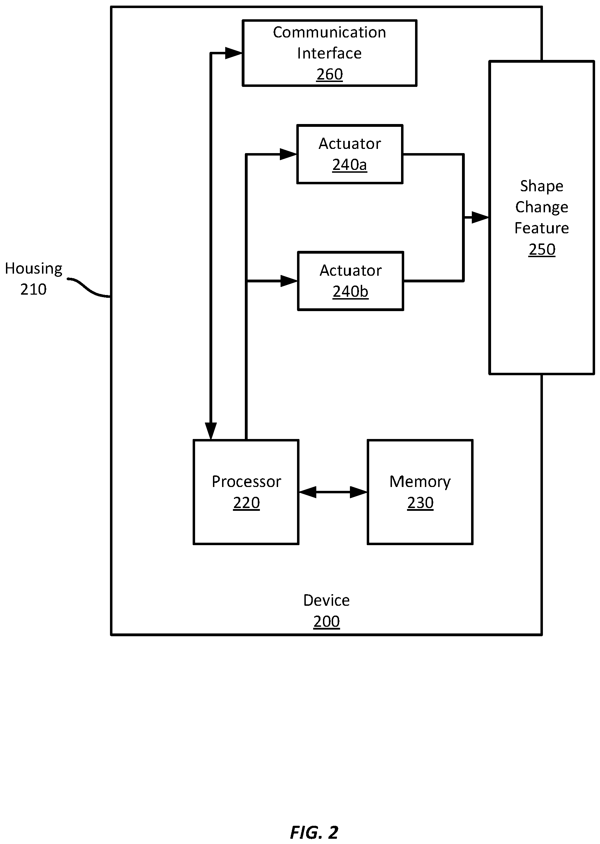

Referring now to Figure 2, Figure 2 shows an example multi-DOF shape-changing device 200. The device 200 has a housing 210 in which are various electronic components, including a processor 220, a memory 230, two actuators 240a-b, a shape-change feature 250, and a communication interface 260.

The device 200 in this example includes a processor 220 that can execute processor-executable instructions stored in the memory 230 to provide functionality to a user of the device. For example, the processor 220 can generate haptic signals to provide haptic effects and transmit those signals to either or both actuators 240a-b to affect the position and orientation of the shape change feature 250. The processor 220 can also receive commands, instructions, or haptic effects from another device via the communication interface. For example, the processor 220 may receive a command from a remote device and generate a haptic signal to output a haptic effect based on the command. However, not all devices may include a processor 220 that can execute processor-executable instructions stored in the memory 230 to provide functionality to a user of the device. For example, a device may not include a processor or memory at all, or may only have processing capabilities to generate actuator signals from a received haptic signal.

In this example, the actuators 240a-b are linear actuators that are physically coupled to the shape change feature. Thus, each actuator 240a-b is able to apply a force to a portion of the shape change feature 250 to affect its position or orientation. For example, if one actuator 240a is physically coupled to one end of the shape change feature 250, and the other actuator 240b is physically coupled to the other end, and by each actuating independently, the shape change feature 250 may rotate with respect to the device housing 210. Or if both actuate the shape change feature 250 in the same direction at substantially the same time, the shape-change feature may translate outwards (or inwards) with respect to the edge of the housing 210. And while this example device 200 only includes one shape change feature 250, other examples, which will be discussed in more detail below, may have more than one shape change feature, one or more of which may be translatable or rotatable in one or more DOFs.

Suitable actuators 240a-b for use with this example device 200 include linear actuators, rotational actuators, electromagnets, etc. that can output a translational or rotational force on a shape-change feature 250. Linear actuators may include screws, pneumatic or hydraulic actuators or pistons, or any other suitable linear actuator that can output a translational force along an axis. Rotational actuators may include electric motors. Electromagnetic actuators may include an electrical coil that can be energized with an electric current to generate an electromagnetic field to repel or attract a metallic or ferromagnetic slug, layer, or other quantity of material. Smart materials may be employed in some examples to provide shape-change features, including piezoelectric materials, shape-memory alloys ("SMA"), smart gels, electro-active polymers, macro-fiber composite materials, etc. Still further suitable actuators may be employed according to different examples.

The shape change feature in this example, is a member that is formed into a rectangular prism shape. However, shape change features according to different examples may be constructed from various materials, including metals, plastics, wood, carbon fiber, etc. and may be formed into any suitable shape based on the shape of a housing for the respective example device, or in the case of one or more smart materials, the shape-change features may be constructed of one or more smart materials, which may also be actuated independently of any actuators disposed within the shape-change device. Thus, while the example device 200 shown in Figure 2 has a rectangular cross section, other devices may have housings with curved or irregular shapes and one or more shape-change features may be shaped and positioned to correspond to the shape of the housing.

The communications interface 260 may be a wired or wireless interface and may enable the device 200 to communicate with a remote device. In some examples, the device 200 may operate without any need to communicate with a remote device; however, in some examples, the device 200 may require commands from a remote device to function. Further, it should be appreciated that some examples devices according to this disclosure may not include a processor 220 and memory 230. In some such examples, the communications interface may couple to the actuator(s) 240a-b to provide haptic signals to the actuator(s) 230a-b directly from a remote device. For example, a user manipulatable device (or "manipulandum") connected to a computing device may be directly driven by the computing device rather than including its own processor or memory, such as described above with respect to dump devices.

In different examples according to this disclosure, shape-changing devices may include any number of shape-change members, which may be disposed along any edge or surface of the respective example shape-changing device. While the example shown in Figure 2 includes a shape-change feature 250 positioned on the right side of the housing, the shape change feature may be positioned on either side, the top or bottom of the housing, or a rear or front face of the housing 200. With respect to example devices having non-rectangular cross-sections, one or more shape change devices may be arranged along any exterior surface of the device. In some examples, the shape-change device 250 may be positioned behind a display screen of the device and may be actuated to affect the position and orientation of the display screen, thereby changing the shape of the device.

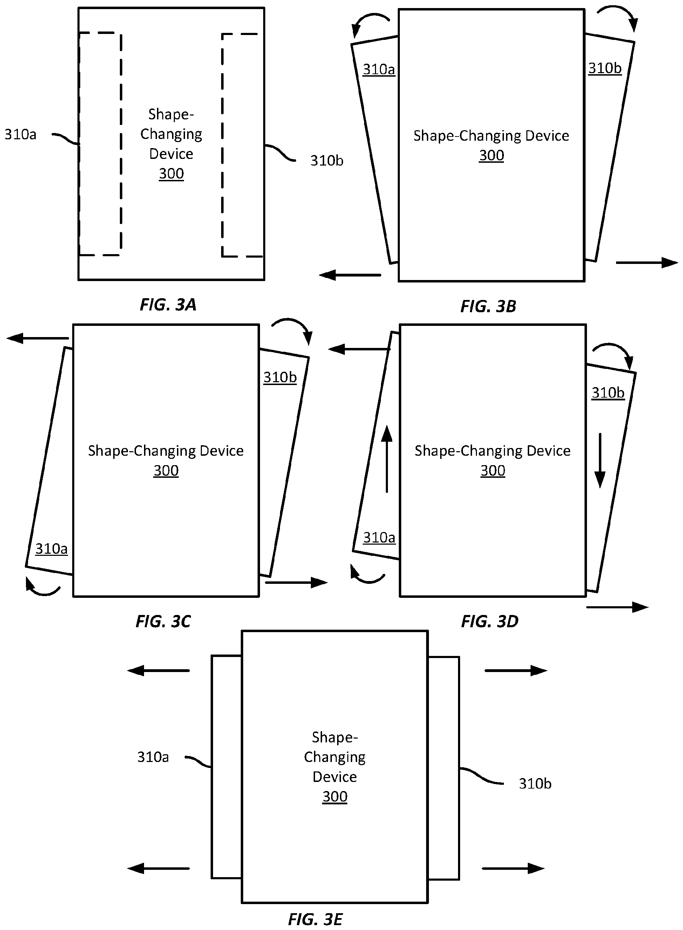

Referring now to Figures 3A-3D, Figures 3A-3D to show an example multi-DOF shape-changing device 300. In this example, the device 300 includes two shape-change features 310a-b that can be translated or oriented in different DOF.

Referring to Figure 3A, the shape-changing device 300 is configured with the shape-change features 310a-b in a fully-retracted position within the housing. Thus, the shape of the device 300 is the shape of the device's housing, which in this example has a rectangular cross-section. In Figure 3B, the shape-change members 310a-b have been rotated and translated. As can be seen, the upper portion of each shape-changing member 310a-b has been extended outward from the housing, while the lower portion of each shape changing member 310a-b has been extended outward from the housing by a lesser amount thereby causing each shape-change member to rotate about an axis and change the shape of the device 300. In this example, one shape-change member 310a has been rotated in a counter-clockwise direction, while the other shape-change member 310b has been rotated in a clockwise direction.

Figure 3C shows another shape configuration of the shape-changing device 300. In this example, each shape-change member 310a has been rotated in a clockwise direction and translated outwards from the housing. Figure 3D shows a shape configuration of the shape-changing device 300 in which each shape-change member 310a-b has been rotated in a clockwise direction and translated outwards from the housing. In addition, one shape-change member 310a has translated towards one edge of the device and the other shape-change member 310b has translated in the opposite direction. Thus, in this example, each shape-change member 310a-b can be adjusted in three DOFs to effect shape-changes for the device. Figure 3E shows a shape change configuration in which each shape-change member 310a-b has been linearly extended outward from the housing.

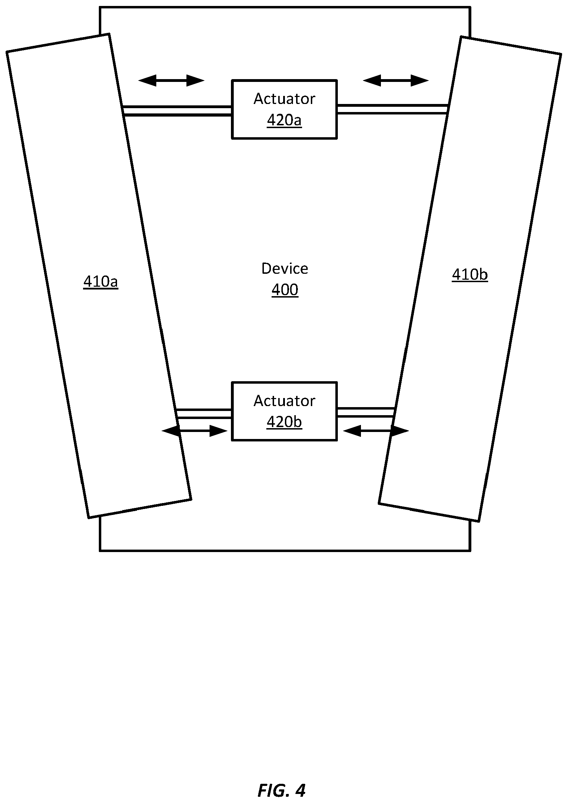

Referring now to Figure 4, Figure 4 illustrates an example multi-DOF shape-change device according to this disclosure. In this example, the device 400 includes two shape-change members 410a-b and two linear actuators 420a-b, each of which is physically coupled to both of the shape-change members 410a-b. The linear actuators 420a-b are configured to actuate along an axis perpendicular to an edge of the device corresponding to the respective shape-change member 410a-b. In addition, the two actuators 420a-b are each coupled to a point offset from the center of the shape-change portion, which allows the actuators to both independently actuate the shape-change members 410a-b, but also to change the position and orientation of the respective shape-change member 410a-b.

As can be seen, actuator 420a is coupled to the shape-change member, *e.g.,* via a pin or joint. Because the actuator 420a is coupled to a location of the shape-change members 410a-b that is offset from its center, when the actuator 420a extends or retracts an arm, it causes the corresponding shape-change member 410a-b to translate and pivot. Similarly, if the second actuator 420b actuates one or both of the shape-change members 410a-b, it causes a similar response. However by coordinating the actuation of the two actuators 420a-b, the actuators 420a-b can cause the shape-change members 410a-b to rotate, translate, or both.

For example, as can be seen in Figure 4, shape-change member 410a is oriented at an oblique angle with respect to the side of the device 400. This results from the upper actuator 420a translating the upper portion of the shape-change member 410a by a larger amount than the lower actuator 420b. Thus, the shape change member rotates about the coupling location between the lower actuator 420b and the shape-change member 410a. In addition to this rotational movement, the lower actuator 420b has also actuated to translate the lower portion of the shape-change member 410a outward from the device 400. Thus, the shape change member 410a has translated outwards from the device 400 in addition to rotating to an oblique angle with respect to the device 400. In this example, the other shape change member 410b has also been translated and rotated with respect to the device 400 in a manner than reflects the movement of the left-most shape-change member 410a.

As is illustrated in Figure 4, the actuators 420a-b are each able to actuate linearly to extend or retract a corresponding portion of each shape-change member 410a-b. In this example, when the actuators 420a-b fully retract both shape-change members 410a-b, the two shape-change members 410a-b are withdrawn entirely within the device 400. For example, they may be flush with the sides of the device 400 or may be withdrawn more deeply into the device 400.

Further, while the example shown in Figure 4 illustrates the two shape-change members 410a-b positioned and oriented as reflections of each other, any other position and orientation that is within the range of motion of the actuators 420a-b may be attained, based on the drive or command signals transmitted to the respective actuators 420a-b. Further, each shape-change member 410a-b may be independently actuated. For example, one or both actuators 420a-b may actuate shape-change member 410a while not actuating shape-change member 410b, or vice versa. In some examples, one shape change member 410a may be translated, while the other shape-change member 410b may be rotated, or any other combination of position or orientation suitable based on commands or signals transmitted to the actuators 420a-b.

And while the example device shown in Figure 4 has two actuators and two shape-change members 410a-b, any suitable number of actuators or shape-change members may be employed. For example, each shape-change member 410a-b may have its own dedicated actuators that do not actuate any other shape-change member. Further, the shape-change members may be arranged along any edge, corner, or manipulandum of the device to extend, retract, or re-orient such portion of the device 400. For example, a shape-change member may be positioned below a display screen, button, joystick, etc. and actuated to raise, lower, or rotate the corresponding component with respect to the device 400.

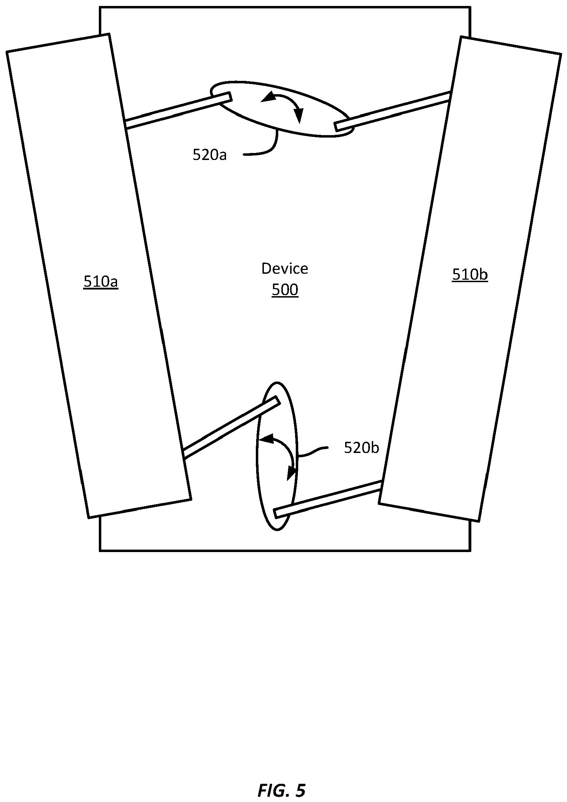

Referring now to Figure 5, Figure 5 illustrates an example multi-DOF shape-change device according to this disclosure. In this example, the device 500 includes two shape-change members 510a-b and two rotary actuators 520a-b, each of which is physically coupled to both of the shape-change members 510a-b. The rotary actuators each have oblong coupling surfaces, e.g., a metal, plastic, etc. surface, to which are coupled straight link members, which are in turn coupled to a respective shape-change members 510a-b. It should be appreciated that while the coupling surfaces have an oblong shape in this example, they may have any suitable shape, including circular, rectangular, hexagonal, etc.

Each of the actuators 520a-b is arranged to rotate the oblong coupling surfaces about an axis of rotation. Rotating the coupling surface causes the link members to push or pull on the corresponding shape-change member 510a-b, thereby changing position or orientation as discussed above with respect to Figure 4. Thus, the rotary actuators can be used to impart a linear forces on a portion of a corresponding shape change member 510a-b. In this example, if both shape change members are coupled to the same rotary actuator, movement of the two shape change members may be synchronized or substantially identical, depending on the coupling locations or sizes of the link members. Alternate configurations using rotary actuators cross-coupled to different locations on opposing shape-change members are possible as well. For example, one rotary actuator 520a may be coupled by a link member to one end of one shape-change member 510a, e.g., near the top of the device, and to a different end of another shape change member 510b, e.g., near the bottom of the device. Such cross-coupling may provide different synchronized shape-change effects.

In further examples, a rotary actuator may not be coupled to both shape-change members 510a-b, but instead, each shape-change member 510a may have its own separate set of rotary actuators, which may enable decoupled movement of the two shape-change members. Further, and as discussed above with respect to Figure 4, while only two shape-change members 510a-b are illustrated in this example device 500, in some examples, a device may include only one shape-change member or may include more than two shape-change members. Further, example devices may have shape-change members located at any position or orientation, such as on the sides, front or rear faces, or behind a display or manipulandum to change the position or orientation of the display or manipulandum.

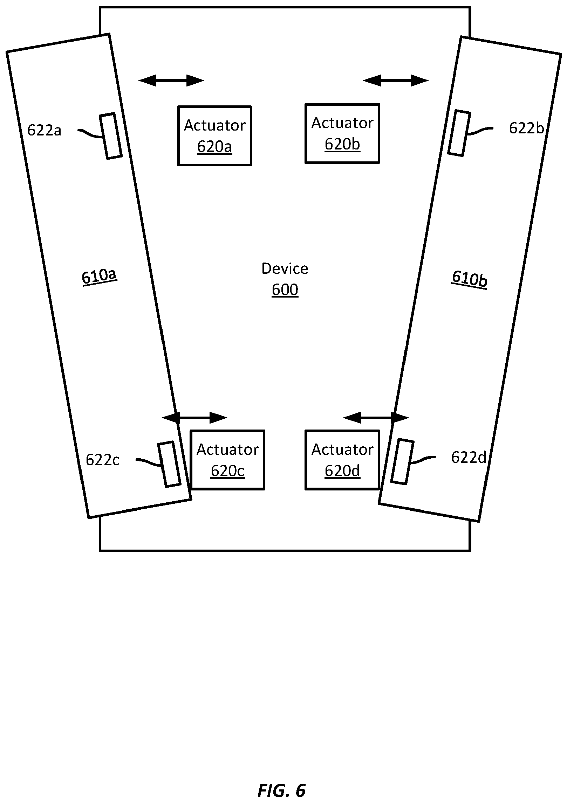

Referring now to Figure 6, Figure 6 illustrates an example multi-DOF shape-change device 600 according to this disclosure. The example device shown in Figure 6 includes four electromagnetic ("EM") actuators 620a-d that can be actuated to generate EM fields to repel or attract a corresponding ferromagnetic slug 622a-d embedded within or coupled to one or more of the shape-change members 610a-b. In this example, each EM actuator includes an electrical coil oriented to project an EM force in a direction substantially perpendicular to the side of the device 600. Thus, in this example, the windings of the electrical coil are around an axis extending across the width of the device and substantially perpendicular to the sides of the device. In some examples, one or more of the electrical coils may be wrapped around a ferromagnetic core. And while this example employs a ferromagnetic slugs 622a-d, in some examples, one or both of the shape-change members 610a-b may be partially or entirely constructed of a ferromagnetic material that may be repelled or attracted by actuating one or more of the actuators 610a-d.

While the example shown in Figure 6 employs four EM actuators, examples may employ only two, similar to the actuator arrangements shown in Figures 4-5. In one such example, energizing one actuator may generate a repulsive force on one shape-change member while simultaneously generating an attractive force on the other shape change member, thereby translating or rotating (or both) the respective shape change members.

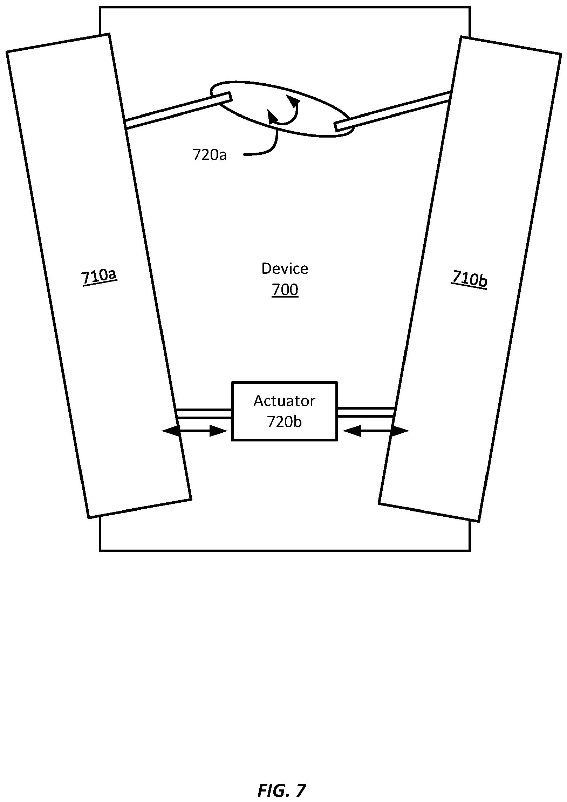

Referring now to Figure 7, Figure 7 illustrates an example multi-DOF shape-change device 700 according to this disclosure. In the example shown in Figure 7, the device 700 includes a combination of linear and rotary actuators 720a-b. The rotary actuator 720a in this example is arranged similarly to the rotary actuator 520a in the example device 500 of Figure 5 and is physically coupled to the two shape-change members 710a-b. The linear actuator 720b is arranged similarly to the linear actuator 420b shown as a part of the example device 400 in Figure 4. Thus, in this example, the shape-change members may be rotated or translated (or both) generally as described above with respect to Figures 4 and 5. It should further be appreciated that other varieties of actuators according to this disclosure may be incorporated in addition to or instead of the actuators 720a-b shown in Figure 7. For example, one or more EM actuators may be employed in combination with either or both of a linear or rotary actuator to provide shape-change effects to an example device according to this disclosure.

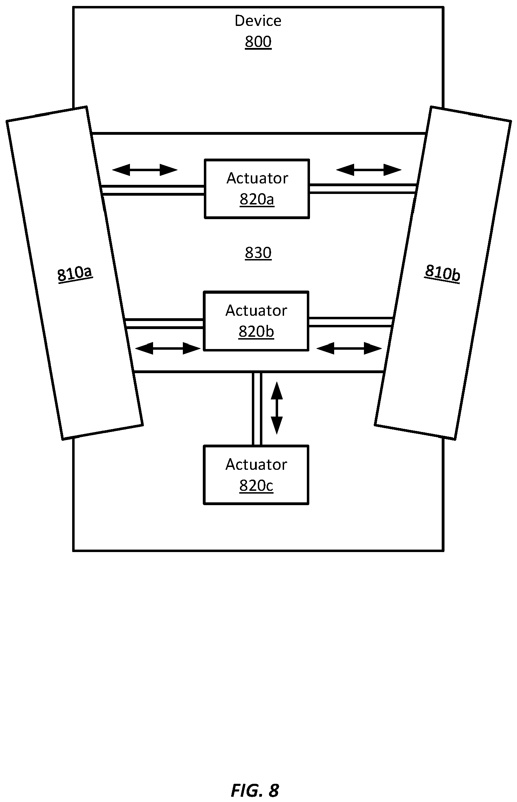

Referring now to Figure 8, Figure 8 illustrates an example multi-DOF shape-change device 800 according to this disclosure. In this example, the device 800 includes linear actuators 820a-b coupled to shape-change members 810a generally as discussed above with respect to the example device 400 of Figure 4. In addition, the actuators 820a-b and shape-change members 810a-b are coupled to a translatable platform 830. In this example, the platform 830 is a flat surface to which the actuators 820a-b are mounted; however, a platform more generally refers to any linkage between two actuators that allows them to be moved together as a unit. A third linear actuator 820c is coupled to the platform 830 and is arranged to translate the platform 830 based on one or more received signals or commands. Thus, the example device 800 may provide an additional degree of freedom for each of the shape-change members 810a-b. And while the example shown in Figure 8 illustrates a platform 830 that moves both actuators 820a-b and both shape-change members 810a-b together, in some examples, two or more platforms may be provided to enable independent translation of each shape-change member 810a-b.

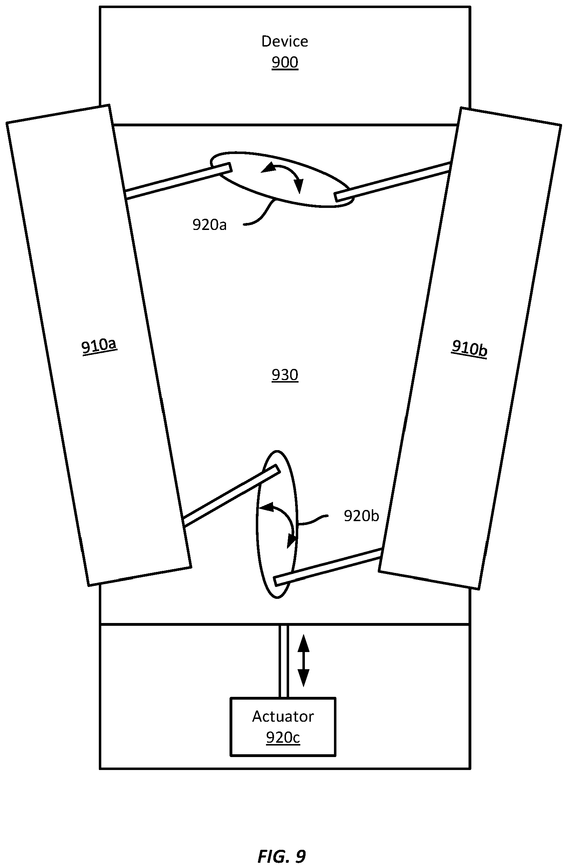

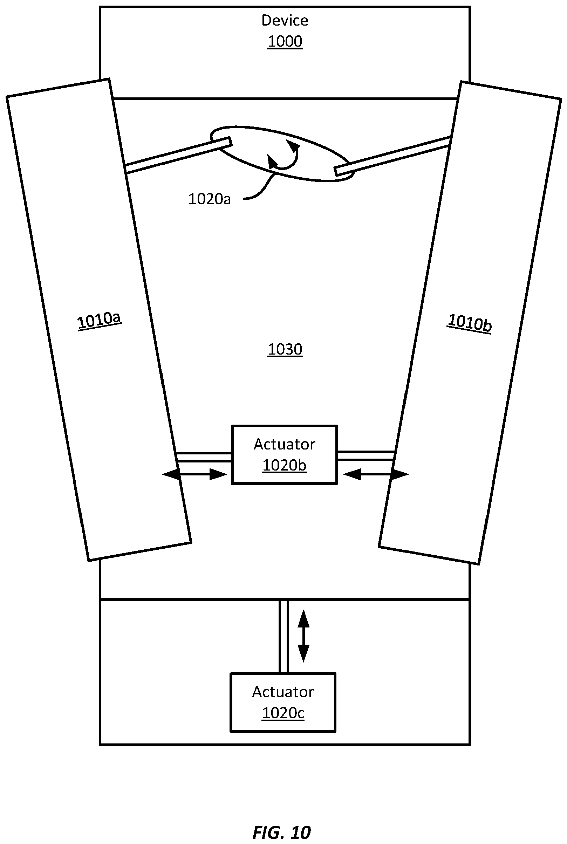

While Figure 8 illustrates an example device 800 having two linear actuators 820a-b coupled to the shape-change members 810a-b, other examples, such as may be seen in Figures 9-10, may include other types or combinations of actuators. For example, Figure 9 shows an example device 900 having two rotary actuators 920a-b generally as described above with respect to Figure 5, that are coupled to a translatable platform 930, similar to the platform 830 of Figure 8. The example device 1000 shown in Figure 10 includes a combination of linear and rotary actuators 1020a-b coupled to a platform 1030. And still further examples, such as examples with multiple independently-translatable platforms or with different types of actuators as discussed above may be employed according to different examples, *e.g.,* the EM actuators described above with respect to Figure 6.

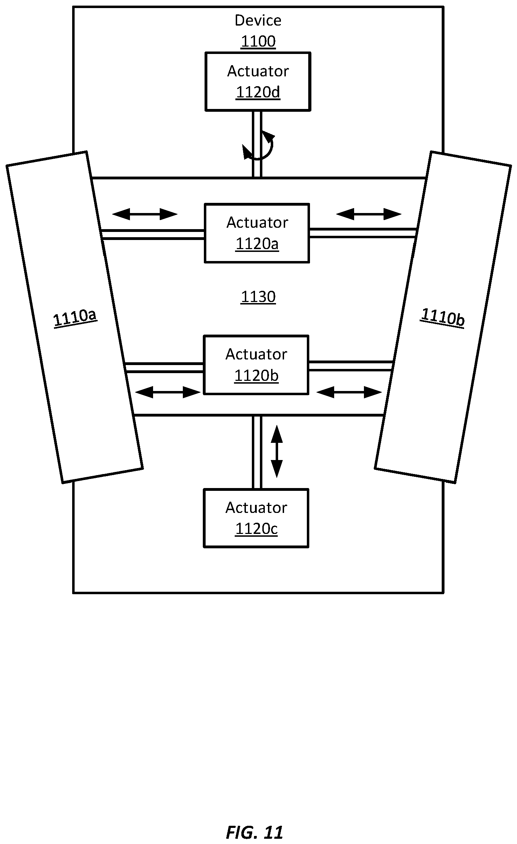

Referring now to Figure 11, Figure 11 illustrates an example multi-DOF shape-change device 1100 according to this disclosure. In this example, two actuators 1120a-b are coupled to the shape-change elements 1110a-b to provide translational and rotational movements of the shape-change elements 1110a-b as discussed above with respect to Figures 1A-10. Similar to the example shown in Figure 10, actuators 1120a-b and the shape-change elements are coupled to a platform 1130 that can be translated by actuator 1120c, generally as discussed above with respect to Figure 10. In addition, a fourth actuator 1120d, a rotary actuator, is coupled to the platform 1130 and is positioned to rotate the platform 1130 about an axis that is collinear with the translational axes to provide a further degree of freedom of movement to the shape-change elements 1110b.

While the example device 1100 shown in Figure 11 includes a single platform 1130, in some examples, a device may include multiple platforms, each of which may be independently translated or rotated as described above with respect to platform 1130. Such additional platforms may be actuated by actuators in addition to those shown in Figure 11 or the various examples throughout the other figures. In some examples, an actuator may actuate more than one platform. For example, a linear actuator may be coupled to two platforms to provide coordinated or independent movement of such platforms.

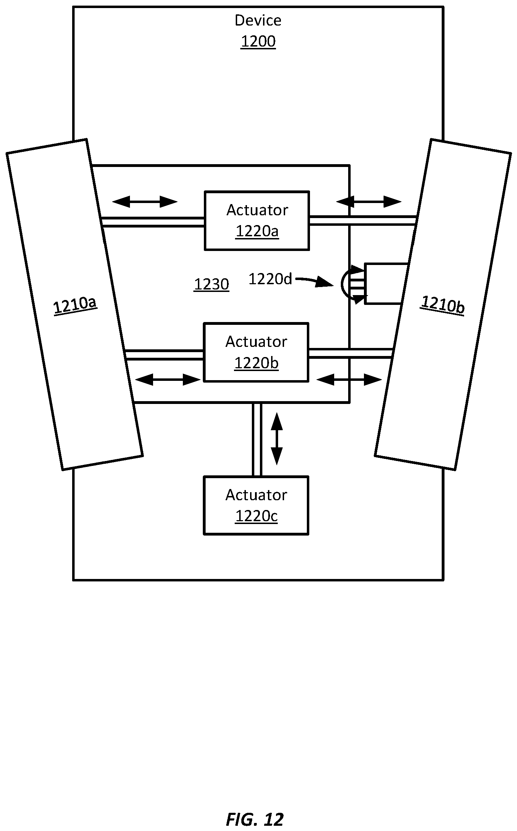

Referring now to Figure 12, Figure 12 illustrates an example multi-DOF shape-change device 1200 according to this disclosure. In this example, two actuators 1220a-b are coupled to the shape-change elements 1210a-b to provide translational and rotational movements of the shape-change elements 1210a-b as discussed above with respect to Figures 1A-11. Similar to the example shown in Figure 10, actuators 1220a-b and the shape-change elements are coupled to a platform 1230 that can be translated by actuator 1220c, generally as discussed above with respect to Figure 10. In addition, a fourth actuator 1220d, a rotary actuator, is coupled to the platform 1230 and is positioned to rotate the platform 1230 to provide a further degree of freedom of movement to the shape-change elements 1210b, similar to the example described with respect to Figure 11, however, the rotational axis of the platform in this example is perpendicular to the translational axis.

As discussed above with respect to Figure 11, while this example device 1200 includes a single platform 1230, in some examples, a device may include multiple platforms, each of which may be independently translated or rotated as described above with respect to platform 1230. Such additional platforms may be actuated by actuators in addition to those shown in Figure 12 or the various examples throughout the other figures. In some examples, an actuator may actuate more than one platform. For example, an actuator may be coupled to two platforms to provide coordinated or independent movement of such platforms.

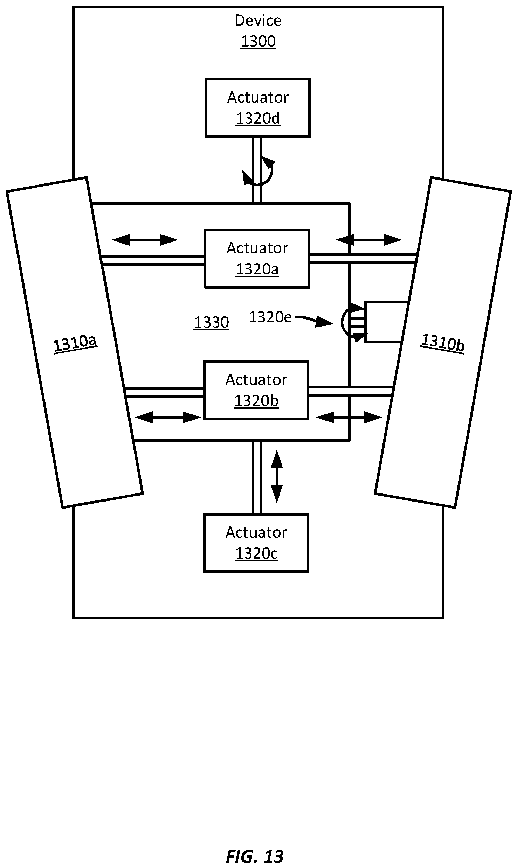

Referring now to Figure 13, Figure 13 illustrates an example multi-DOF shape-change device 1300 according to this disclosure. In this example, the device 1300 includes actuators 1320a-b arranged to translate and rotate the shape-change members 1310a-b. In addition, as generally described above with respect to Figures 11 and 12, actuators 1320a-b are coupled to a platform 1330 that can be translated by actuator 1320c and rotated around two different axes by actuators 1320d-e. Thus, the example device shown in Figure 13 provides an additional DOF of movement for the shape-change members 1310a-b and combines features of example devices shown in Figures 10-12. And while the example shown in Figure 13 includes linear and rotational actuators 1320a-e at different positions, such actuators may be replaced by any suitable actuators according to this disclosure to provide translation or rotation of the shape-change members 1310a-b in various degrees of freedom.

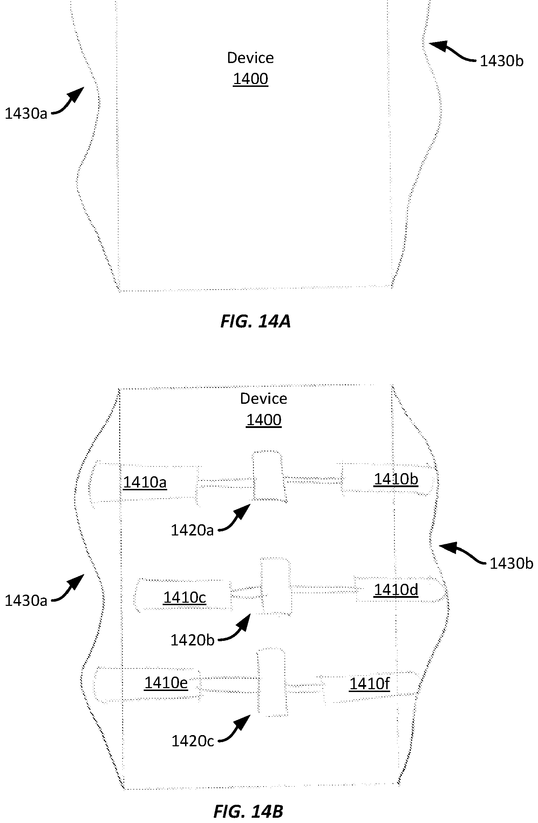

Referring now to Figures 14A-B, Figures 14A-B show an example device 1400 having multiple shape-change members 1410a-f arranged to translate to provide customizable shape changes to the device 1400. In this example, the sides of the device 1400 are covered with flexible coverings 1430a-b that overlay the shape-change members 1410a-f. Such flexible coverings 1430a-b may be constructed from a cloth material, a natural or synthetic rubber or other polymer, or any other suitable flexible material. The shape-change members 1410a-f may be translated or rotated to affect the shape of the flexible coverings 1430a-b. As can be seen in Figure 14A, the sides of the device 1400 have a shape based on the respective positions of the shape-change elements 1410a-f.

As can be seen in Figure 14B, actuators 1420a-c are each coupled to two shape-change elements 1410a-f, respectively. For example, actuator 1420a is coupled to shape-change elements 1410a-b. Thus, the actuator 1420a can independently translate either or both shape-change members 1410a-b to affect a shape of the flexible coverings 1430a-b. And while in this example, the actuators 1420a-c comprise linear actuators that are physically coupled to the shape-change members 1410a-f, any other suitable actuators or combinations of actuators according to this disclosure may be employed. Further, while this example device 1400 includes six shape-change members 1420a-f, other numbers of shape-change members may be employed. For example, by using a larger number of shape-change members, e.g., ten or more per side, more detailed shapes may be generated by individually actuating shape-change members according to a commanded shape for one or both of the flexible coverings 1430a-b. Further, while the example device 1400 includes two flexible coverings 1430a-b, in some examples, a different number of flexible coverings may be provided on any side or face of the device to provide shape-change effects as described above.

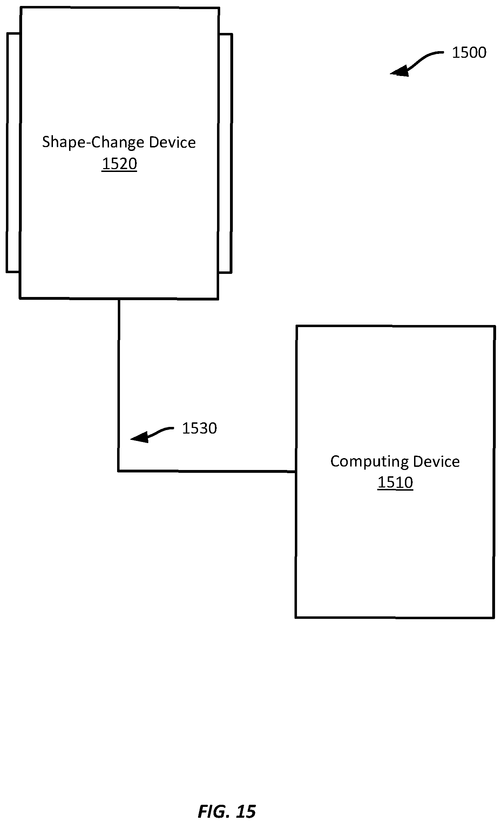

Referring now to Figure 15, Figure 15 shows an example system 1500 for multi-DOF shape-changing devices. In this example, the shape-change device 1520 is in communication with a computing device 1510 via a wired or wireless communications link. In this example, the shape-change device 1520 receives commands or signals from the computing device 1510 and, in response to those commands or signals, generates one or more shape-change effects by translating or rotating one or more shape-change members. As discussed above with respect to Figure 2, the shape-change device 1520 may include its own local processor that can generate signals to generate shape-change effects; however, in some examples, the shape-change device 1520 may not have its own local processor to generate shape-change effects.

In some examples, the shape-change device 1520 may be an interface device for the computing device 1510, such as a gamepad, virtual-reality ("VR") controller, joystick, mouse, steering wheel, gear shift lever, etc. In some examples, the computing device 1510 may be in communication with multiple shape-change devices 1510. For example, the computing device 1510 may allow multiple users to simultaneously participate in a VR environment or play a game on a game console. Further, in some examples, the shape-change device 1520 may be a standalone computing device in communication with the computing device 1510. For example, the shape-change device 1520 may be a smartphone, PDA, tablet, laptop, etc., and the computing device 1510 may be a device such as a home computing hub, e.g., Alexa, or an Internet-of-Things ("IOT") device that may provide shape-change effects to the computing device to notify a user of a status of the IOT device or a system controlled by the IOT device. Further, in some examples, the shape-change device 1520 may be any suitable shape-change device according to this disclosure, including any of the example devices described with respect to Figures 1A-14.

In one example that may employed in a VR embodiment, a user may grasp one or more shape-change devices 1520 according to this disclosure. A VR system may then track movement of the shape-change devices 1520 in multiple DOFs and determine interactions within the VR environment. For example, a shape-change device 1520 may deform to simulate the shape or movements of a VR object the user picks up. In one example, the user may pick up a sword. The shape-change device 1520 may change shape to simulate the shape of the sword's hilt. As the user uses the sword, the shape-change device 1520 may change shape according to different blows the user strikes with the sword. For example, the shape-change device 1520 may expand at its top, such as shown in Figure 3B, if a blow is struck with tip of the sword, or expand at its bottom, such as shown in Figure 1B, if the blow is struck with the base of the sword. Further, if the user strikes a blow with the middle portion of the sword or the hilt, the shape-change device 1520 may expand evenly on both sides, such as shown in Figure 3E. In another example, the user may pick up an animal, such as a fish, or other living creature that may move while in the user's grasp. The shape-change device 1520 may change its shape based on movements of the fish, such as to simulate the fish wriggling in the user's hand.

While in this example, the computing device 1510 and the shape-change device 1520 are shown as two separate devices, in some examples, the two devices may be integrated into a single housing or may be physically coupled together to provide a single, integrated device. For example, in some examples, the communications link 1530 may be established by docking the shape-change device 1520 with the computing device 1510, or vice versa. Further, in some examples, the shape-change device 1520 may include one or more sensors to detect a contact with the device. Such sensors may include pressure sensors, such as piezoelectric sensors, capacitive or resistive sensors, linear or rotational encoders (to detect movements based on user contact), etc. Detected contacts may be employed in some examples to ensure that shape-change effects are not output if a user is not contacting or holding the shape-change device 1520. In some examples, a detected contact may be employed to select one or more shape-change members to actuate. For example, if a user is not contacting a particular shape-change member, the shape-change device 1520 may not adjust the position of that shape-change member as it would provide no haptic effect to the user. Still further examples are within the scope of this disclosure.

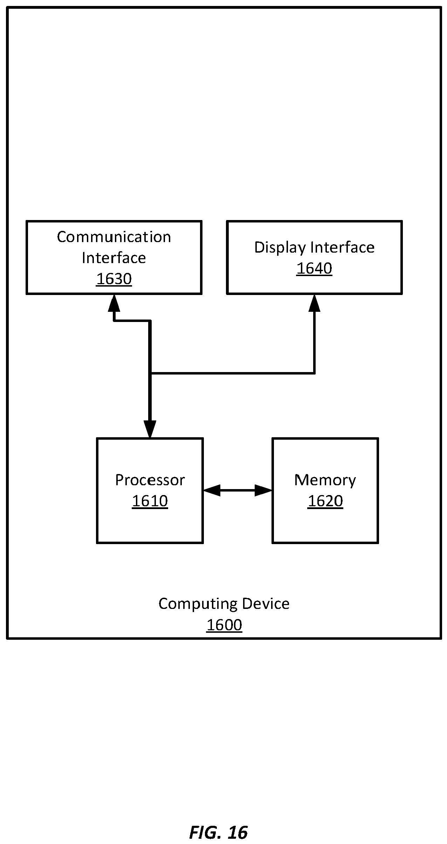

Referring now to Figure 16, Figure 16 shows an example computing device 1600 suitable for use in systems for multi-DOF shape-changing devices according to this disclosure, such as the example system 1500 shown in Figure 15. The example computing device 1600 includes a processor 1610 in communication with memory 1620, communication interface 1630, and display interface 1640. The processor 1610 executes program code stored in the memory 1620 and can communicate with a shape-change device, such as shape-change device 1520, via communications interface 1630. The communications interface may include any suitable wired or wireless communications technique, including Ethernet, Universal Serial Bus ("USB"), Bluetooth, near-field communication ("NFC"), cellular, WiFi, or other communications convention. The display interface provides a communications connection to a display device, which may be integrated into the computing device, such as in the case of a tablet or laptop, or may be a discrete, separate device, such as a computer monitor.

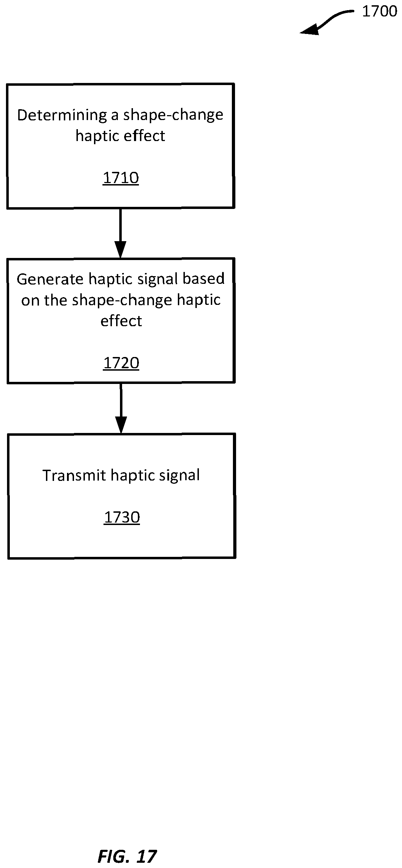

Referring now to Figure 17, Figure 17 shows an example method 1700 for multi-DOF shape-changing devices according to this disclosure. The example method 700 will be described with respect to the example device 200 shown in Figure 2. However, it should be appreciated that any suitable systems or devices according to this disclosure may be employed.

At block 1710, the processor 220 determines a shape-change haptic effect. In this example, the device 200 is a manipulandum sized to be grasped by person's hand, thus the processor 220 determines a shape-change haptic effect to output by the device 200 itself. However, in some examples, the processor 220 may determine a shape-change haptic effect to output to another device, such as via the communication interface 260. For example, referring to Figure 15, in one example, the computing device 1510 may determine a shape-change haptic effect to be output by the shape-change device 1520.

To determine a shape-change haptic effect to output, the processor 220 may receive a signal from a remote computing device, such as a gaming console, a remote control toy or device, a VR system, or other computing system. The signal may include information, such as an identification of a shape-change haptic effect to output or an event. The processor 220 may then determine a shape-change haptic effect based on the received information.

For example, the processor 220 may access a look-up table or library of haptic effects based on the received information. For example, a look-up table may store associations or correspondences between shape-change IDs and parameters for various shape-change haptic effects. The processor 220 may then use information, such as an identification of a shape-change haptic effect to identify an associated or corresponding shape-change haptic effect. In another example, a look-up table may maintain associations or correspondences between different events and shape-change haptic effects. Thus, the processor 220 may determine a shape-change haptic effect based on an event.

As mentioned above, the processor 220 may instead access a library of shape-change haptic effects. In one example, the library may have shape-change haptic effects associated with different categories of haptic effects. For example, the library may include categories corresponding to haptic effect types, such as vibrations, translations, rotations, etc. The processor 220 may then determine a shape-change haptic effect based on information received from a remote device, such information may include one or more types or characteristics of haptic effects to output. The processor 220 may then identify one or more shape-change haptic effects from the library that have the same or similar characteristics as those received from the remote device.

In some examples, the processor 220 may receive low-level signals or parameters from a remote device that specify drive signals to output to one or more actuators. For example, the processor 220 may receive a signal that indicates a degree of translation for an identified actuator, e.g., the signal may include an actuator ID, a translation or rotation direction, and a translation distance or rotation amount.

At block 1720, the processor 220 generates a haptic signal based on the shape-change haptic effect. In this example, the processor 220 generates a drive signal to transmit to one or more actuators 240a-b. For example, the processor 220 may access a look-up table and obtain parameters for a shape-change haptic effect as described above. The processor 220 may then use the parameters to generate a drive signal. For example, if the shape-change haptic effect indicates that a top portion of a shape-change feature is to translate outwards from the device by 10 millimeters ("mm"), the processor 220 may generate a drive signal that provides a drive voltage or current to actuator 240a configured to cause the actuator 240a to translate the top portion of the shape-change feature 250.

A drive signal may be determined based on an existing position of the shape-change feature 250 and the commanded position of the shape-change feature 250. For example, if the shape-change feature 250 is already extended 5 mm from the housing, the drive signal may be configured, e.g., by selecting a voltage and duration, to translate the shape-change feature by an additional 5 mm. A voltage and duration may be selected based on stored characteristics of the actuator, such as a translation rate per volt. In some examples, a sensor such as rotary or linear encoder, rheostat, etc., may be employed to measure the displacement or position of the actuator or one or more members driven by the actuator. In some examples, one or more actuators may be commanded to move in known increments, such as in the case of a stepper motor. Thus, based on the configuration of the actuator and any available sensor information, such as absolute or relative positional information, the processor 220 may generate the drive signal.

In some examples, as discussed above, the processor 220 may instead receive explicit parameters for a drive signal, such as a voltage, current, duration, etc. In one such an example, the processor 220 may generate a drive signal according to the explicit parameters.

At block 1730, the processor 220 transmits the haptic signal to the actuator. In this example, the processor 220 transmits the haptic signal to an amplifier, which amplifies the haptic signal and provides the amplified signal to the actuator. However, in some examples, the processor 220 may transmit the haptic signal directly to the actuator without any intervening components. Further, in some examples, the processor 220 may transmit the haptic signal to a remote device.

For example, referring to Figure 15, the processor of the computing device 1510 may perform blocks 1710 and 1720 and transmit a haptic signal to the shape-change device 1520 at block 1730, which may then further process the haptic signal. In one such example, the shape-change device 1520 may receive the haptic signal and perform an example method, such as the method 1700 of Figure 17, before generating and transmitting a haptic signal to one or more actuators in the shape-change device 1520. However, in some examples, the shape-change device 1520 may lack a processor and thus, the computing device 1510 may directly transmit one or more haptic signals to one or more actuators within the shape-change device 1520.

After completing block 1730, the method 1700 may end or may repeat.

While some examples of methods and systems herein are described in terms of software executing on various machines, the methods and systems may also be implemented as specifically-configured hardware, such as field-programmable gate array (FPGA) specifically to execute the various methods. For example, examples can be implemented in digital electronic circuitry, or in computer hardware, firmware, software, or in a combination thereof. In one example, a device may include a processor or processors. The processor comprises a computer-readable medium, such as a random access memory (RAM) coupled to the processor. The processor executes computer-executable program instructions stored in memory, such as executing one or more computer programs. Such processors may comprise a microprocessor, a digital signal processor (DSP), an application-specific integrated circuit (ASIC), field programmable gate arrays (FPGAs), and state machines. Such processors may further comprise programmable electronic devices such as PLCs, programmable interrupt controllers (PICs), programmable logic devices (PLDs), programmable read-only memories (PROMs), electronically programmable read-only memories (EPROMs or EEPROMs), or other similar devices.

Such processors may comprise, or may be in communication with, media, for example computer-readable storage media, that may store instructions that, when executed by the processor, can cause the processor to perform the steps described herein as carried out, or assisted, by a processor. Examples of computer-readable media may include, but are not limited to, an electronic, optical, magnetic, or other storage device capable of providing a processor, such as the processor in a web server, with computer-readable instructions. Other examples of media comprise, but are not limited to, a floppy disk, CD-ROM, magnetic disk, memory chip, ROM, RAM, ASIC, configured processor, all optical media, all magnetic tape or other magnetic media, or any other medium from which a computer processor can read. The processor, and the processing, described may be in one or more structures, and may be dispersed through one or more structures. The processor may comprise code for carrying out one or more of the methods (or parts of methods) described herein.

The foregoing description of some examples has been presented only for the purpose of illustration and description and is not intended to be exhaustive or to limit the disclosure to the precise forms disclosed. Numerous modifications and adaptations thereof will be apparent to those skilled in the art without departing from the spirit and scope of the disclosure.

Reference herein to an example or implementation means that a particular feature, structure, operation, or other characteristic described in connection with the example may be included in at least one implementation of the disclosure. The disclosure is not restricted to the particular examples or implementations described as such. The appearance of the phrases "in one example," "in an example," "in one implementation," or "in an implementation," or variations of the same in various places in the specification does not necessarily refer to the same example or implementation. Any particular feature, structure, operation, or other characteristic described in this specification in relation to one example or implementation may be combined with other features, structures, operations, or other characteristics described in respect of any other example or implementation.

Use herein of the word "or" is intended to cover inclusive and exclusive OR conditions. In other words, A or B or C includes any or all of the following alternative combinations as appropriate for a particular usage: A alone; B alone; C alone; A and B only; A and C only; B and C only; and A and B and C.

## Claims

1. A device (200) comprising:
a housing (210) sized to be grasped by a hand;
a shape-change element (250) disposed at least partially within the housing (210); and
a plurality of actuators (240a-b) disposed within the housing (210), the plurality of actuators (240a-b) arranged to rotate and translate the shape-change element (250).

2. The device (400, 500, 700) of claim 1, wherein the plurality of actuators (420a-b, 520a-b, 720a-b) comprises, any one or more of the following:
two linear actuators (420a-b);
a linear actuator (720a) and a rotary actuator (720b); or
two rotary actuators (520a-b).

3. The device (700) of claim 2, where the plurality of actuators comprises a linear actuator (720a) and a rotary actuator (720b), wherein the linear actuator (720a) is arranged to translate the rotary actuator (720b) and the shape-change element (710a-b).

4. The device (100) of any preceding claim, wherein the manipulandum comprises two shape-change elements (110a-b), each of the two shape-change elements (110a-b) disposed at least partially within the housing and on opposite sides of the housing.

5. The device (400, 500, 700) of any preceding claim, wherein the plurality of actuators (420a-b, 520a-b, 720a-b) are arranged to translate each of the two shape-change elements (410a-b, 510a-b, 710a-b) and rotate each of the two shape-change elements (410a-b, 510a-b, 710a-b).

6. The device (500) of any preceding claim, wherein the plurality of actuators (520a-b) are arranged to:
translate the shape-change element (510a-b) in a first degree of freedom;
rotate the shape change element (510a-b) in a second degree of freedom about a first axis of rotation; and
rotate the shape change element (510a-b) in a third degree of freedom about a second axis of rotation different from the first axis of rotation.

7. The device (200) of any preceding claim, further comprising:
a non-transitory computer-readable medium (230); and
a processor (220) configured to execute processor-executable instructions stored on the non-transitory computer-readable medium (230) to:
receive a signal indicating a shape-change haptic effect to output to the manipulandum;
generate a haptic signal based on the shape-change haptic effect; and
transmit the haptic signal to the plurality of actuators (240a-b) to cause the shape-change haptic effect.

8. The device (200) of claim 7, wherein the processor is configured to execute processor-executable instructions stored on the non-transitory computer-readable medium (230) to perform either or both of the following:
determine the shape-change haptic effect to output to a manipulandum;
detect a contact with the manipulandum.

9. A method comprising:
determining a shape-change haptic effect to output to a shape-change device (200, 400, 500, 700), the shape-change device (200, 400, 500, 700) comprising a housing (210) and at least one shape-change element (250) disposed at least partially within the housing (210), the shape-change haptic effect comprising a translation and a rotation of the shape-change element (250, 410, 510, 710);
generating a haptic signal based on the shape-change haptic effect; and
transmitting the haptic signal to one or more actuators (240a-b, 420a-b, 520a-b, 720a-b) of a plurality of actuators (240a-b) to cause the shape-change haptic effect, the plurality of actuators (240a-b, 420a-b, 520a-b, 720a-b) arranged to translate and rotate the shape-change element (250, 410, 510, 710).

10. The method of claim 9, wherein the plurality of actuators (240a-b, 420a-b, 520a-b, 720a-b) comprises any one or more of the following:
two linear actuators (420a-b);
a linear actuator (720a) and a rotary actuator (720b); or
two rotary actuators (520a-b).

11. The method of claim 10, where the plurality of actuators (720a-b) comprises a linear actuator (720a) and a rotary actuator (720b), wherein the linear actuator (720a) is arranged to translate the rotary actuator (720b) and the shape-change element (710a-b).

12. The method of any of claims claim 9-11, wherein the manipulandum comprises two shape-change elements (410a-b, 510a-b, 710a-b), each of the two shape-change elements (410a-b, 510a-b, 710a-b) disposed at least partially within the housing and on opposite sides of the housing.

13. The method of any of claims 9-12, wherein the plurality of actuators are arranged to translate each of the two shape-change elements (410a-b, 510a-b, 710a-b) and rotate each of the two shape-change elements (410a-b, 510a-b, 710a-b).

14. The method of any of claims 9-13, wherein the plurality of actuators (520a-b) are arranged to:
translate the shape-change element (510a-b) in a first degree of freedom;
rotate the shape change element (510a-b) in a second degree of freedom about a first axis of rotation; and
rotate the shape change element (510a-b) in a third degree of freedom about a second axis of rotation different from the first axis of rotation.

15. The method of any of claims 9-14, further comprising detecting a contact with the shape-change device (400, 500, 700).
